# EUROPÄISCHE PATENTANMELDUNG

(11) **EP 2 487 804 A1**
(43) Veröffentlichungstag der Anmeldung: **15.08.2012**
(21) Anmeldenummer: 12152450.8
(22) Anmeldetag: 25.01.2012
(51) Int. Cl.: H04B 3/54, H02J 13/00, H04L 12/28

(54) **Verfahren und System zur Übermittlung von Informationen über die Erzeugungsart von elektrischer Energie**

(30) Priorität: 09.02.2011 DE 102011003842
(71) Anmelder: Siemens Aktiengesellschaft, 80333 München (DE)
(72) Erfinder: Fries, Steffen, 85598 Baldham (DE); Bußer, Jens-Uwe, 81739 München (DE); Hof, Hans-Joachim, 85057 Ingolstadt (DE)

(57) **Zusammenfassung**

Die Erfindung betrifft ein Verfahren und ein System zur Übermittlung von Informationen über die Erzeugungsart von elektrischer Energie, welche von einer Stromzusammensetzungsinformationseinheit (3) über ein Stromversorgungsnetz (1) an mehrere Verbraucher (4) verteilt werden. Dabei wird durch die Stromzusammensetzungsinformationseinheit (3) auf eine Netzspannung des Stromversorgungsnetzes (1) mindestens ein Informationssignal aufmoduliert, welches in codierter Form eine Information über die Erzeugungsart der übertragenen elektrischen Energie beinhaltet, wobei eine Netzfrequenz des Stromversorgungsnetzes (1) als Trägerfrequenz dient. Über das Stromversorgungsnetz (1) wird das mindestens eine Informationssignal unidirektional an alle Verbraucher (4) verteilt. Beim Verbraucher (4) wird das mindestens eine Informationssignal durch eine Empfangseinrichtung (21) demoduliert und decodiert und die Information in visueller und/oder akustischer Form ausgegeben, und/oder in elektronischer Form weiteren Geräten zur Verfügung gestellt.

Die Erfindung ermöglicht es, einen Verbraucher auf einfache und kostengünstige Art und Weise mit Informationen über die Zusammensetzung des im Stromverteilungsnetz bereitgestellten Energiemixes zu versorgen.

## Beschreibung

Die Erfindung betrifft ein Verfahren und ein System zur Übermittlung von Informationen über die Erzeugungsart von elektrischer Energie.

Zur Erzeugung oder Produktion von elektrischer Energie - oft auch nur als "Strom " bzw. "Stromerzeugung" bezeichnet - stehen eine Vielzahl unterschiedlicher Erzeugungsarten zur Verfügung. Neben der "konventionellen" Stromerzeugung aus fossilen Brennstoffen, wie Kohle, Öl und Gas, sowie der Atomkraft, werden in zunehmendem Maß auch alternative Energiequellen, wie z.B. Solar-, Wasser- oder Windkraft, genutzt. Dabei treten neben den "großen" Energieversorgungsunternehmen immer mehr kleinere dezentrale Energieerzeuger auf, insbesondere auch innerhalb kleiner lokaler Märkte, auf. Demzufolge wurde die Möglichkeit geschaffen, Strom von verschiedenen Anbietern und abhängig von ihrer Erzeugungsart zu beziehen.

Ein steigendes Umweltbewusstsein hat dazu geführt, dass Endkunden oder Verbraucher derzeit beispielsweise schon wählen können, ob sie "normalen Strom" oder "Ökostrom" konsumieren wollen. Dazu wird ein separater Vertrag zwischen Energielieferanten und Verbraucher abgeschlossen, in welchem der Energielieferant zusichert, dass die an den Verbraucher gelieferte elektrische Energiemenge auf die im Vertrag vereinbarte Art produziert wird. In einigen Ländern sind Energieversorgungsunternehmen auch dazu verpflichtet die Erzeugungsart der Energie auf der Stromrechnung anzugeben.

Der Verbraucher erhält aber derzeit keinerlei Information hinsichtlich der Erzeugungsarten der aktuell in das Verteilnetz eingespeisten elektrischen Energie. Der Verbraucher hat somit einerseits keine echte Kontrollmöglichkeit und ist andererseits auch nicht in der Lage, sein Verbrauchsverhalten möglicher Weise an eine aktuelle Erzeugungsart der elektrischen Energie anzupassen, z. B. wenn er seinen Bedarf überwiegend dann decken möchte, wenn gerade besonders viel regenerativ gewonnene Energie eingespeist wird.

Der Erfindung liegt die Aufgabe zugrunde, ein Verfahren und ein System anzugeben, welche auf einfache und kostengünstige Weise eine Übermittlung von Informationen über eine aktuelle Erzeugungsart von elektrischer Energie ermöglichen.

Diese Aufgabe wird einerseits gelöst durch ein erfindungsgemäßes Verfahren zur Übermittlung von Informationen über die Erzeugungsart von elektrischer Energie, welche von einer Stromzusammensetzungsinformationseinheit über ein Stromversorgungsnetz an mehrere Verbraucher verteilt wird. Dabei wird durch die Stromzusammensetzungsinformationseinheit auf eine Netzspannung des Stromversorgungsnetzes mindestens ein Informationssignal aufmoduliert, welches in codierter Form eine Information über die Erzeugungsart der übertragenen elektrischen Energie beinhaltet. Eine Netzfrequenz des Stromversorgungsnetzes, im Falle des Verbundnetzes also beispielsweise 50 Hz, dient dabei als Trägerfrequenz. Das mindestens eine Informationssignal wird dann über das Stromversorgungsnetz unidirektional an alle Verbraucher verteilt. Beim Verbraucher wird das mindestens eine Informationssignal schließlich durch eine Empfangseinrichtung beim Verbraucher demoduliert und decodiert, so dass die Information in visueller und/oder akustischer Form ausgegeben werden kann.

Die Aufgabe wird andererseits auch gelöst durch ein erfindungsgemäßes System zur Übermittlung von Informationen über die Erzeugungsart von elektrischer Energie. Dieses umfasst eine Stromzusammensetzungsinformationseinheit, welche die Informationen über die Zusammensetzung der elektrische Energie im Stromversorgungsnetz an mehrere Verbraucher verteilt, indem sie der Netzspannung des Stromversorgungsnetzes mindestens ein Informationssignal aufmoduliert, welches in codierter Form eine Information über die Erzeugungsart der übertragenen elektrischen Energie beinhaltet, wobei eine Netzfrequenz des Stromversorgungsnetzes als Trägerfrequenz dient, und welche das mindestens eine Informationssignal über das Stromversorgungsnetz unidirektional an alle Verbraucher verteilt. Das System weist außerdem Empfangseinrichtungen auf, welche das Informationssignal demodulieren und decodieren, sowie Ausgabeeinheiten, an welchen die Information in visueller und/oder akustischer Form für den jeweiligen Verbraucher ausgebbar ist.

Die Erfindung ermöglicht es, dem Verbraucher mit einfachen technischen Mitteln und damit kostensparend eine Information über die aktuellen Erzeugungsarten des im Verteilnetz bereitgestellten Energiemixes zur Verfügung zu stellen. Dabei wird erfindungsgemäß ein Trägerfrequenzverfahren eingesetzt, wie es z.B. aus der Rundsteuertechnik bekannt ist. Dabei wird der Netzspannung des Stromversorgungsnetzes ein Informationssignal mit einer einfachen Codierung aufmoduliert, welches dann unidirektional als Broadcast an alle Verbraucher verteilt wird. Die erfindungsgemäße Übertragungsart stellt insofern eine vereinfachte Powerline Communication (PLC) dar, wobei jedoch kein komplexes und damit kostspieliges PLC-Modem erforderlich ist.

Gemäß einer Ausführungsform der Erfindung wird das Informationssignal beispielsweise mit Hilfe einer Amplitudenmodulation auf die Netzspannung aufmoduliert. Eine technisch besonders einfach realisierbare Ausführungsform sieht dabei vor, dass eine Frequenz des Informationssignals eine Erzeugungsart und die Amplitude des Informationssignals mit dieser Frequenz einen Anteil der auf die diese Art erzeugten Energie an der übertragenen Gesamt-Energie charakterisiert. Es wird also für jede Erzeugungsart der Energie eine diese eindeutig charakterisierende Frequenz verwendet. Eine zugehörige Amplitude ist dabei proportional zum Anteil der jeweiligen Energieart an der übertragenen Gesamt-Energie. Durch entsprechende Demodulation und Decodierung des/der Informationssignals/Informationssignale und entsprechende Ausgabe der Information beim Verbraucher, wird dieser in die Lage versetzt, eine aktuelle Zusammensetzung der empfangenen Energie hinsichtlich ihrer Erzeugungsart zu erkennen und diese z.B. bei seinem Verbrauchsverhalten zu berücksichtigen. So ist es beispielsweise denkbar, intelligente Haushaltsgeräte derart zu programmieren, dass sie nur dann betrieben werden, wenn zumindest ein vorgebbarer Anteil der empfangenen elektrischen Energie auf eine vorgebare Erzeugungsart erzeugt wurde, also z.B. ein vorgebbarer Anteil aus regenerativen Energiequellen gewonnen wurde.

Eine besonders einfache und verbraucherfreundliche Ausführungsform des erfindungsgemäßen Systems sieht vor, dass die Empfangseinrichtung integraler Bestandteil eines Stromzählers ist.

Vorteilhaft ist es auch, wenn die Ausgabeeinheit integraler Bestandteil der Empfangseinrichtung ist.

Um dem Verbraucher eine einfache Informationsaufnahme zu ermöglichen, ist es gemäß einer weiteren Ausführungsform der Erfindung vorgesehen, dass die Ausgabeeinheit ein Display umfasst, auf welchem die Information in Textform und/oder in grafischer Darstellung, insbesondere in Form von Symbolen, ausgegeben wird.

Alternativ oder zusätzlich kann die die Ausgabeeinheit auch mindestens ein Leuchtmittel, insbesondere in Form von Leuchtdioden, umfassen, mit Hilfe derer die Information ausgegeben wird. Dabei kann sowohl die Anzahl der Leuchtmittel, die Farbe der Leuchtmittel als auch die Intensität des ausgestrahlten Lichts zur Informationswiedergabe genutzt werden. Eine visuelle Anzeige kann grundsätzlich kontinuierlich angezeigt werden. Denkbar ist aber auch, dass die Information nur auf Anforderung, z.B. in Form einer Betätigung eines entsprechenden Bedienelements an der Ausgabeeinheit oder an der Empfangseinrichtung, ausgegeben wird.

Z.B. aus Gründen der Barrierefreiheit kann auch eine Sprachausgabe vorgesehen sein, welche z.B. auch durch Betätigen eines entsprechenden Bedienelements abrufbar ist.

Empfangseinheit und/oder Ausgabeeinheit können die erhaltenen Daten in elektronischer Form an andere Geräte (z. B. im Haushalt) weitergeben. Diese Geräte können dann bestimmte Aktionen durchführen, z.B. Einschalten sobald der Anteil an regenerativer Energie einengewissen Prozentsatz überschreitet, oder Abschalten bei Unterschreitung. Idealerweise findet die Kommunikation dieser Daten über eine zumindest integritätsgeschützte Verbindung statt.

Weitere Merkmale und Vorteile der Erfindung ergeben sich aus Ausführungsbeispielen, welche im Folgenden anhand der Zeichnungen erläutert werden.

Es zeigen:
- Fig. 1: eine schematische Darstellung eines beispielhaften Stromversorgungsnetzes
- Fig. 2: eine schematisches Blockschaltbild einer erfindungsgemäßen Systems zur Übermittlung von Informationen über die Erzeugungsart von elektrischer Energie und

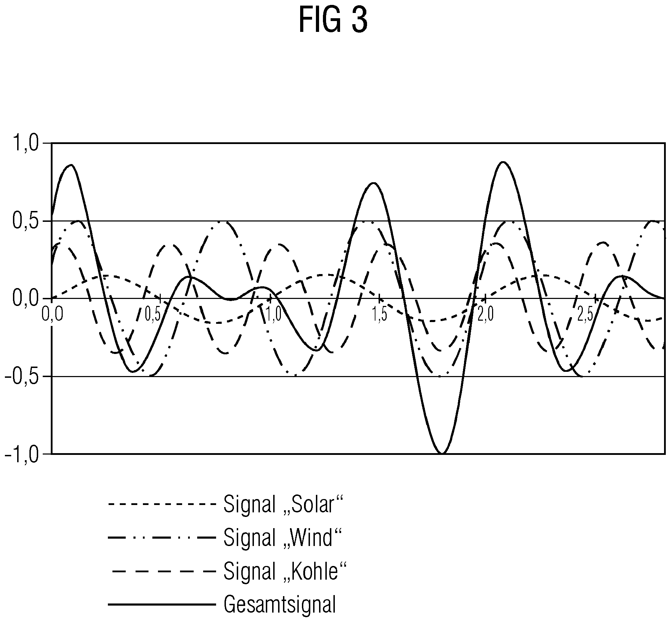

- Fig. 3: eine grafische Darstellung eines erfindungsgemäßen Informationssignals.

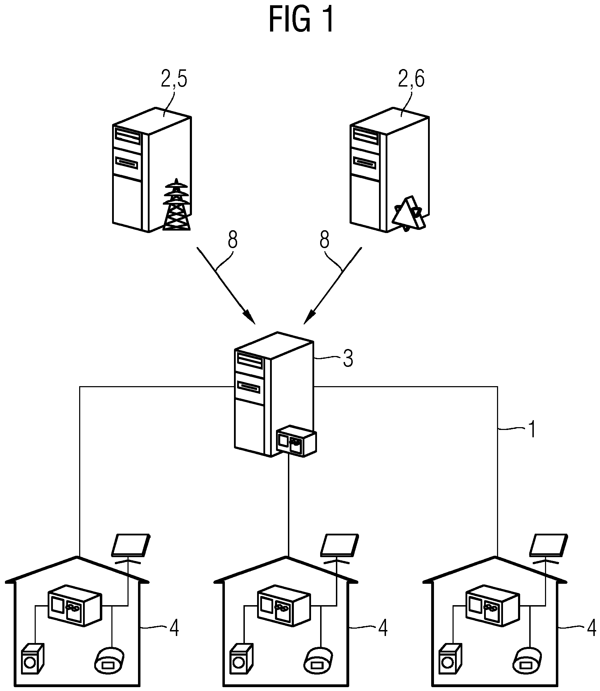

Figur 1 zeigt schematisch und stark vereinfacht ein mögliches Stromversorgungsnetz 1. Dabei sind verschiedene Energieerzeuger 2 über ein Stromversorgungsnetz 1 mit mehreren Verbrauchern 4 verbunden. Als Energieerzeuger 2 sind beispielhaft ein erster Energieerzeuger 5 in Form des Verteilungsnetzbetreibers und ein zweiter Energieerzeuger 6, z.B. in Form eines lokalen Energieerzeugers, dargestellt. Selbstverständlich können aber auch mehr oder weniger Energieerzeuger 2 mit dem Stromversorgungsnetz 1 verbunden sein.

Die einzelnen Energieerzeuger 2 können Energie auf unterschiedliche und auch auf wechselnde Art erzeugen. Um den Verbrauchern 4 eine Information hinsichtlich der jeweiligen Erzeugungsart der übertragenen elektrischen Energie zur Verfügung zu stellen, wird einer Netzspannung des Energieversorgungsnetzes ein Informationssignal aufmoduliert, welches in codierter Form eine Information über die Erzeugungsart der übertragenen elektrischen Energie beinhaltet. Dabei wird ein Trägerfrequenzverfahren eingesetzt, wobei die Netzfrequenz des Stromversorgungsnetzes 1 als Trägerfrequenz dient.

Im Falle des in Figur 1 dargestellten Stromversorgungsnetzes 1 werden die Informationen 8 über die Stromerzeugung zunächst von den Energieerzeugern 2 an die Stromzusammensetzungsinformationseinheit 3 übertragen. In der Stromzusammensetzungsinformationseinheit 3 wird dann in Abhängigkeit von den von den Energieerzeugern 2 erhaltenen Informationen ein aktualisiertes Informationssignal erzeugt, indem die Stromzusammensetzungsinformationseinheit 3 die erhaltenen Informationen unter Berücksichtigung der eingespeisten Leistung des Energieerzeugers 2 mischt. Dieses Informationssignal wird in das Verteilnetz eingespeist und gibt den Verbrauchern 4 Aufschluss über die aktuelle Zusammensetzung der momentan im Verteilnetz bereitgestellten elektrischen Energie.

Als Stromzusammensetzungsinformationseinheit 3 wird erfindungsgemäß diejenige Einheit innerhalb des Stromversorgungsnetzes 1 bezeichnet, welche die Informationen über die Erzeugung der elektrischen Energie mischt und letztendlich an die Verbraucher liefert. Die Stromzusammensetzungsinformationseinheit 3 kann beispielsweise, wie dargestellt, in einer Ortsnetzstation untergebracht werden, kann aber selbstverständlich auch durch andere Einheiten, wie z.B. einen Energieerzeuger 2 selbst gebildet werden. Dabei ist jedoch zu beachten, dass in jedem Abschnitt des Verteilnetzes pro Frequenz nur eine Stromzusammensetzungsinformationseinheit Signale einspeisen darf, da es ansonsten zu ortsabhängigen Interferenzen (Auslöschungen) zwischen den Signalen kommen könnte, so dass die korrekte Information des Verbrauchers nicht mehr gewährleistet wäre. Sind in einem Verteilnetz verschiedene lokale Energieerzeuger 2 vorhanden, so können diese auch Signale direkt einspeisen, wenn sie unterschiedliche Frequenzen verwenden, selbst wenn sie auf die gleiche Weise Strom erzeugen (z.B. alle Solarkraftanlagen). Eine alternative Lösung bieten hier so genannte Phasor Measurement Units, die die Phasenverschiebungen bei der Einspeisung von gleichen Energiearten (die demzufolge gleich kodiert sind) detektieren und damit bei der Berechnung der resultierenden Energie berücksichtigen können.

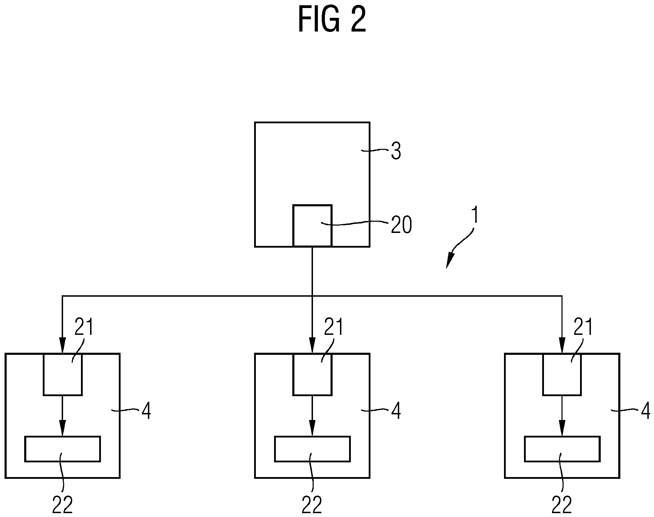

Ein in Figur 2 schematisch dargestelltes System zur Übermittlung von Informationen über die Erzeugungsart von elektrischer Energie umfasst die Stromzusammensetzungsinformationseinheit 3, welche das aufmodulierten Informationssignal über das Stromversorgungsnetz 1 unidirektional und vorzugsweise mit kleiner Datenübertragungsrate an mehrere Verbraucher 4 verteilt. Zur Aufmodulierung und Codierung des Informationssignals umfasst die Stromzusammensetzungsinformationseinheit eine Sendeeinrichtung 20.

Bei den Verbrauchern 4 sind an das Stromversorgungsnetz 1 Empfangseinrichtungen 21 angeschlossen, welche ein empfangenes Informationssignal jeweils demodulieren und decodieren. Zur Ausgabe der Information sind jeweils Ausgabeeinheiten 22 vorgesehen, an welchen die Information in visueller und/oder akustischer Form ausgebbar ist.

Die Ausgabeeinheiten 22 können dabei auch integraler Bestandteil der Empfangseinrichtungen 21 und/oder die Empfangseinrichtungen 21 integraler Bestandteil eines nicht dargestellten Stromzählers sein.

Die Ausgabeeinheiten 22 können auf vielfältige Weise ausgestaltet sein. So kann z.B. ein Display vorgesehen sein, auf welchem die Information in Textform und/oder in grafischer Darstellung, insbesondere in Form von Symbolen, ausgegeben wird. Die Ausgabeeinheiten 21 können auch Leuchtmittel, insbesondere in Form von Leuchtdioden, umfassen.

Die Empfangseinrichtungen 21 sowie die Ausgabeeinheiten 22 können Schnittstellen (Ethernet TCP/IP, Modbus, BACnet, WLAN, Bluetooth, Inhouse-PLC, ...) enthalten, um die Informationen weiteren Geräten elektronisch sowohl drahtgebunden als auch drahtlos zur Verfügung stellen zu können. Damit ist es möglich, dass jene Geräte automatisch auf das Erzeugungsprofil des gerade in das Verteilnetz eingespeisten Stromes reagieren.

Abhängig von der konkreten Ausgestaltung einer Ausgabeeinheit 21, dem konkreten Inhalt des Informationssignals sowie einem konkreten Informationsbedürfnis können insbesondere hinsichtlich des Detaillierungsgrades unterschiedliche Verbraucherinformationen ausgegeben werden. So ist es z.B. bei einer sehr einfachen Ausführungsform des erfindungsgemäßen Systems denkbar, dass lediglich eine Information darüber ausgegeben wird, aus welcher Energiequelle die übertragene Energie vorwiegend erzeugt wurde. In einer Ausführungsform mit erhöhtem Informationsgrad können bspw. alle beteiligten Erzeugungsarten ausgegeben werden, wobei z.B. die Anzahl von aktiven Leuchtmitteln und/oder deren Lichtintensität die Höhe des Anteils der jeweiligen Erzeugungsart am gesamten Energiemix wiedergeben. Ist eine besonders detaillierte Verbraucherinformation gewünscht, so können die einzelnen Erzeugungsarten z.B. mit ihrem jeweiligen prozentualen Anteil ausgegeben werden.

Zur Aufmodulation des Informationssignals wird erfindungsgemäß ein Trägerfrequenzverfahren eingesetzt, bei welchem das Informationssignal der Netzspannung des Stromversorgungsnetzes 1 aufmoduliert wird. Dabei kann z.B. eine Amplitudenmodulation eingesetzt werden, wobei das Informationssignal derart kodiert ist, dass eine Frequenz des Informationssignals eine Erzeugungsart und die Amplitude des Informationssignals einen Anteil der auf die diese Art erzeugten Energie an der übertragenen Gesamt-Energie charakterisiert. Figur zeigt beispielhaft den Verlauf eines auf diese Weise erzeugten Informationssignals. Dabei repräsentiert eine erste Kennlinie 30 den Anteil einer ersten Erzeugungsart, z.B. Solarstrom, eine zweite Kennlinie 31 den Anteil einer zweiten Erzeugungsart, z.B. Energie aus einer Windkraftanlage, eine dritte Kennlinie 32 den Anteil einer dritten Erzeugungsart, z.B. Energie aus Kohle und eine vierte Kennlinie 33 ein Gesamt-Informationssignal. Dabei ist deutlich zu erkennen, dass den unterschiedlichen Erzeugungsarten jeweils unterschiedliche Signalfrequenzen zugeordnet sind. Die zugehörigen Amplituden repräsentieren dabei jeweils den prozentualen Anteil der jeweiligen Erzeugungsart an der übertragenen Gesamt-Energie. Im dargestellten Beispiel setzt sich die Gesamt-Energie demzufolge aus einem 15%-igen Anteil an Solarstrom, einem 50%-igen Anteil an Windenenergie und einem 35%-igen Anteil aus Kohlestrom zusammen. Diese Information kann durch die Empfangseinrichtungen 21 jeweils demoduliert und decodiert werden und an die Verbraucher 4 über die jeweiligen Ausgabeeinheiten 22 ausgegeben werden. Die Verbraucher 4 sind damit z.B. in die Lage versetzt die Erzeugungsart der empfangenen elektrischen Energie in seinem Verbrauchsverhalten zu berücksichtigen.

## Patentansprüche

1. Verfahren zur Übermittlung von Informationen über die Erzeugungsart von elektrischer Energie, welche von einer Stromzusammensetzungsinformationseinheit (3) über ein Stromversorgungsnetz (1) an mehrere Verbraucher (4) verteilt wird, bei dem
- durch die Stromzusammensetzungsinformationseinheit (3) auf eine Netzspannung des Stromversorgungsnetzes (1) mindestens ein Informationssignal aufmoduliert wird, welches in codierter Form eine Information über die Erzeugungsart der übertragenen elektrischen Energie beinhaltet, wobei eine Netzfrequenz des Stromversorgungsnetzes (1) als Trägerfrequenz dient,
- das mindestens eine Informationssignal über das Stromversorgungsnetz (1) unidirektional an alle Verbraucher (4) verteilt wird,
- das mindestens eine Informationssignal durch eine Empfangseinrichtung (21) beim Verbraucher (4) demoduliert und decodiert wird und die Information in visueller und/oder akustischer Form ausgebbar ist und/oder weiteren Geräten zur Verfügung gestellt wird.

2. Verfahren nach Anspruch 1,
**dadurch gekennzeichnet, dass** das Informationssignal mit einer Datenübertragungsrate von weniger als 25 bit/s, insbesondere weniger als 20 bit/s, verteilt wird.

3. Verfahren nach einem der Ansprüche 1 oder 2,
**dadurch gekennzeichnet, dass** das Informationssignal mit Hilfe einer Amplitudenmodulation auf die Netzspannung aufmoduliert wird.

4. Verfahren nach Anspruch 3,
**dadurch gekennzeichnet, dass** je eine Frequenz des Informationssignals eine Erzeugungsart und die zugehörige Amplitude des Informationssignals einen Anteil der auf die diese Art erzeugten Energie an der übertragenen Gesamt-Energie charakterisiert.

5. System zur Übermittlung von Informationen über die Erzeugungsart von elektrischer Energie, mit
- einer Stromzusammensetzungsinformationseinheit (3), welche
■ Informationen über die Zusammensetzung der bereitgestellten elektrischen Energie über ein Stromversorgungsnetz (1) an mehrere Verbraucher (4) verteilt,
■ einer Netzspannung des Stromversorgungsnetzes (1) mindestens ein Informationssignal aufmoduliert, welches in codierter Form eine Information über die Erzeugungsart der übertragenen elektrischen Energie beinhaltet, wobei eine Netzfrequenz des Stromversorgungsnetzes (1) als Trägerfrequenz dient, und
■ das mindestens eine Informationssignal über das Stromversorgungsnetz (1) unidirektional an alle Verbraucher (4) verteilt,
- Empfangseinrichtungen (21), welche das Informationssignal demodulieren und decodieren und weiteren Geräten elektronisch zur Verfügung stellen, sowie
- Ausgabeeinheiten (22), an welchen die Information in visueller und/oder akustischer Form für den jeweiligen Verbraucher (4) ausgebbar ist.

6. System nach Anspruch 5,
**dadurch gekennzeichnet, dass** die Empfangseinrichtung (21) integraler Bestandteil eines Stromzählers ist.

7. System nach einem der Ansprüche 5 oder 6,
**dadurch gekennzeichnet, dass** die Ausgabeeinheit (22) integraler Bestandteil der Empfangseinrichtung (21) ist.

8. System nach einem der Ansprüche 5 bis 7,
**dadurch gekennzeichnet, dass** die Ausgabeeinheit (22) ein Display umfasst, auf welchem die Information in Textform und/oder in grafischer Darstellung, insbesondere in Form von Symbolen, ausgegeben wird.

9. System nach einem der Ansprüche 5 bis 8,
**dadurch gekennzeichnet, dass** die Ausgabeeinheit (22) mindestens ein Leuchtmittel, insbesondere Leuchtdiode, umfasst, mit Hilfe derer die Information ausgegeben wird.

10. System nach einem der Ansprüche 5 bis 8,
**dadurch gekennzeichnet, dass** die Empfangseinrichtung (21) und/oder die Ausgabeeinheit (22) die erhaltenen Informationen weiteren Geräten in elektronischer Form zur Verfügung stellt.
